# EUROPEAN PATENT APPLICATION

(11) **EP 4 567 699 A1**
(43) Date of publication of application: **11.06.2025**
(21) Application number: 24204348.7
(22) Date of filing: 02.10.2024
(51) Int. Cl.: G06Q 10/20, G06F 3/01, G06N 20/00, G06Q 50/20, G09B 9/00, G09B 25/02

(54) **TASK-BASED DISTRIBUTIONAL SEMANTIC MODEL OR EMBEDDINGS FOR INFERRING INTENT SIMILARITY**

(30) Priority: 06.12.2023 US 202318530722
(71) Applicant: Hamilton Sundstrand Space Systems International, Inc., Windsor Locks, CT 06096 (US)
(72) Inventor: WU, Peggy, Ellicott City, MD, 21042 (US)
(74) Representative: Dehns

(57) **Abstract**

A course of action (CoA) monitoring system (100) comprises a sensor (110) and a computing system. The sensor is configured to monitor tasks included in a course of action (CoA) performed by a human operator in an environment. The computing system is in signal communication with the sensor. The computing system includes a database that stores a plurality of reference CoAs defined by reference tasks having an intended target goal, and stores a trained task-based distributional semantic model configured to determine an intent similarity of the operator performing the tasks included in the CoA during real-time. The computing system inputs the monitored tasks determined by the sensor into the trained task-based distributional semantic model to determine a deviation between the reference tasks and the monitored tasks.

## Description

### STATEMENT OF FEDERAL SUPPORT

This invention was made with Government support under DOE-AR0001097 awarded by Department of Defense. The Government has certain rights in the invention.

### BACKGROUND

The present disclosure relates generally to user course of actions and goal achievement, and more specifically, to a task-based distributional semantic model or embeddings for inferring intent similarity when a user performs tasks for achieving a target goal.

A user will partake in a course of action (CoA) to achieve an ultimate goal. The course of action includes a series of tasks, which break down the primary units of work required to perform the CoA needed to achieve the ultimate goal. Each task can be subdivided into smaller subtasks, which provide more detail, and further subdivided into atomic tasks, which at the most granular level, are the basic, indivisible steps required to execute the subtasks and, by extension, the tasks and the entire CoA.

### BRIEF DESCRIPTION

According to a non-limiting embodiment a course of action (CoA) monitoring system comprises a sensor and a computing system. The sensor is configured to monitor tasks included in a course of action (CoA) performed by a human operator in an environment. The computing system is in signal communication with the sensor. The computing system includes a database that stores a plurality of reference CoAs defined by reference tasks having an intended target goal, and stores a trained task-based distributional semantic model configured to determine an intent similarity of the operator performing the tasks included in the CoA during real-time. The computing system inputs the monitored tasks determined by the sensor into the trained task-based distributional semantic model to determine a deviation between the reference tasks and the monitored tasks.

In addition to one or more of the features described above, or as an alternative to any of the foregoing embodiments, the computing system performs a cosine similarity analysis to produce a similarity value indicating a level of the deviation.

In addition to one or more of the features described above, or as an alternative to any of the foregoing embodiments, the computing system compares the similarity value to a threshold value and a failure to achieve the intended target goal based on the comparison.

In addition to one or more of the features described above, or as an alternative to any of the foregoing embodiments, the computing system determines the failure to achieve the intended target goal in response to the similarity value being less than the threshold value.

In addition to one or more of the features described above, or as an alternative to any of the foregoing embodiments, the cosine similarity analysis includes assigning reference vector to each reference task included in the reference CoA, assigning a vector to each monitored task performed by the operator, and determining a distance between the vector of a monitored task and the reference vector of the reference task.

In addition to one or more of the features described above, or as an alternative to any of the foregoing embodiments, the computing system generates an alert in response to determining the failure to achieve the intended target goal.

In addition to one or more of the features described above, or as an alternative to any of the foregoing embodiments, the alert includes instructions on how to correct the deviation.

According to another non-limiting embodiment, A method of monitoring a course of action (CoA) is provided. The method comprises storing, in a database, a plurality of reference CoAs defined by reference tasks having an intended target goal, a storing, in a computing system, a trained task-based distributional semantic model configured to determine an intent similarity of the operator performing the tasks included in the CoA during real-time. The method further comprises monitoring, via a sensor, tasks included in a course of action (CoA) performed by a human operator in an environment. The method further comprises outputting the monitored tasks from the sensor to the computing system, and inputting the monitored tasks into the trained task-based distributional semantic model to determine a deviation between the reference tasks and the monitored tasks.

### BRIEF DESCRIPTION OF THE DRAWINGS

For a more complete understanding of this disclosure, reference is now made to the following brief description, taken in connection with the accompanying drawings and detailed description, wherein like reference numerals represent like parts:
FIG. 1 depicts a course of action (CoA) monitoring system according to a non-limiting embodiment of the present disclosure;
FIG. 2 is a block diagram of a computing machine configured to infer intent similarities of user performing tasks of a CoA based on a trained task-based distributional semantic model according to a non-limiting embodiment of the present disclosure;
FIG. 3 illustrates the CoA monitoring system of FIG. 1 operating in a training mode to train a task-based distributional semantic model according to a non-limiting embodiment of the present disclosure;
FIG. 4 depicts a neural network utilized by the CoA monitoring system of FIG. 1 according to a non-limiting embodiment of the present disclosure;
FIG. 5 illustrates the CoA monitoring system operating in a testing and assessment mode to infer intent similarities of user performing tasks of a CoA based on a trained task-based distributional semantic model according to a non-limiting embodiment of the present disclosure;
FIG. 6 is a flow diagram illustrating a method of performing a cosine similarity analysis to determine a deviation from intent using a cosine similarity analysis as a proxy for intent similarity according to a non-limiting embodiment of the present disclosure; and
FIG. 7 is a flow diagram illustrating a method inferring intent similarity of user performing tasks of a CoA using a task-based distributional semantic model according to a non-limiting embodiment of the disclosure.

### DETAILED DESCRIPTION

A detailed description of one or more embodiments of the disclosed apparatus and method are presented herein by way of exemplification and not limitation with reference to the Figures.

Tasks described in Courses of Action or instructions may be modified due to changes in the operational environment or context. These improvisations take place for a number of reasons, such as temporary disruptions to original systems or workflows where operators must work around issues to get the task done. However, operators may inadvertently introduce errors or bad actors may opportunistically introduce threats that violate the original intent.

The tasks of a CoA for achieving an ultimate goal also tend to be defined as sequence of steps, along with the pre-conditions or constraints that must be satisfied before the next task is taken. While this can answer questions regarding "how" and "when" a task should take place, the context around "why" in terms of the underlying intent may only be represented at a high level. While reference manuals and Courses of Action can be generated within a context, it is impossible to provide all possible contexts and those who carry out tasks often must improvise when conditions change. In reality, however, tasks can often be performed in different sequences without changes to the intent or the outcome of achieving the ultimate goal.

According to a non-limiting embodiment, a course of action (CoA) monitoring system employs a task-based distribution semantic model, which utilizes a reference semantic space that describes the relationships between tasks and the full set of instructions or a CoA for achieving a target goal (e.g., an intended end goal), including their positions within subtasks. This reference semantic space is created using a set of tasks and deviations that have been deemed to adhere to the original intent of the instruction generator. To evaluate new courses of action, the new data is processed and placed into the same semantic space, and the semantic distance between the reference task and the new tasks are calculated. The semantic distance serves as a proxy for deviation in intent. A distance beyond a threshold can be indicative of changes in intent, and whether the change is significant enough that it will prevent achieving the intended target goal.

In addition, the CoA monitoring system according to a non-limiting embodiment of the present disclosure performs an analysis to identify tasks included in a CoA, creates representations for the resulting set of tasks, and creates a real-valued vector representation or an embedding of the tasks that encodes its position. Full task instructions or a CoA known to successfully achieve a target goal are then used to build a model of how each atomic task relates to tasks and the larger context of the full set of instructions or CoA. Variations of tasks that are deemed to have the same intent are also included as input for the reference model. In subsequent evaluations, a sequence of tasks or actions are compared to the reference distribution (e.g., an ideal sequence of tasks) using cosine similarity as a proxy for intent similarity. In this manner, the CoA monitoring system can assist operators understand whether modifications deviate from the original intent of the task, and by how much, while avoiding unnecessary stoppages that would occur when deviating from an expected task does not change the intent or the outcome of achieving the target goal.

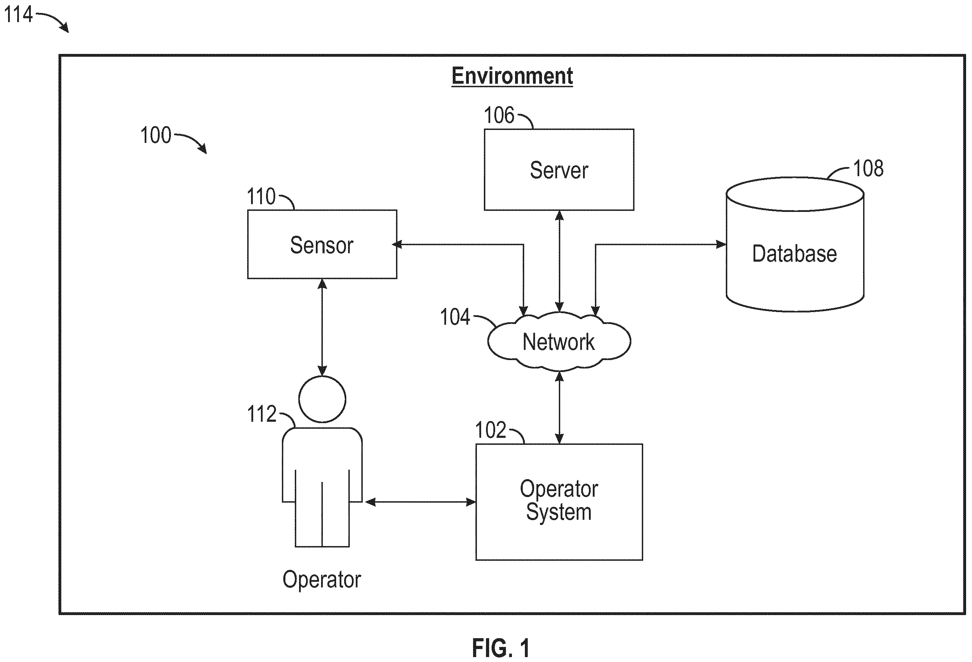

With reference now to FIG. 1, a course of action (CoA) monitoring system 100 is illustrated according to a non-limiting embodiment of the present disclosure. The CoA monitoring system 100 monitors an environment 114, which includes an operator system 102, a network 104, a server 106, a database 108, a sensor 110. A human operator 112 can work or operate in the environment 114. For example, the human operator 112 can perform various actions or tasks to operate, control and/or manipulate operation system 102 while being monitored by the sensor 110.

The operator system 102 is coupled to or communicates over the network 104. Communications between the operator system 102 and the network 104 may occur in any suitable manner, such as via a wired or wireless connection. The operator system 102 represents any suitable device or system used by the operator 112 to provide information to the server 106 or database 108 or to receive information from the server 106 or database 108. Example types of information may include inputs and outputs associated with operator system 102. Any suitable number(s) and type(s) of operator system 102 may be used in the system 100. For example, the operator system 102 can represent a computing system (e.g., controller), a desktop computer, a laptop computer, a smartphone, a tablet computer, a control console in the environment 114 (such as a control console of an airborne vehicle or other operator-controlled system), or the like. The operator system 102 can include avionics, pilot controls, and the like. The operator system 102 can include an assembly, structure, vehicle, and/or any other or additional types of operator systems may be used in the system 100. The operator system 102 can also include any suitable structure configured to transmit and/or receive information.

The network 104 facilitates communication between various components of the system 100. For example, the network 104 can facilitate bidirectional communication for data exchange between the operator system 102, the server 106, the database 108, and the sensor(s) 110. The network 104 may communicate Internet Protocol (IP) packets, frame relay frames, Asynchronous Transfer Mode (ATM) cells, or other suitable information between network addresses. The network 104 may include one or more local area networks (LANs), metropolitan area networks (MANs), wide area networks (WANs), all or a portion of a global network such as the Internet, or any other communication system or systems at one or more locations. The network 104 may also operate according to any appropriate communication protocol or protocols.

The server 106 is coupled to the network 104 and is coupled to or otherwise communicates with the database 108. The server 106 can include a computing system (e.g., controller), which supports the retrieval of information from the database 108 and the processing of that information. In at least one non-limiting embodiment, the database 108 can also be used within the server 106 to store information, in which case the server 106 may store the information itself. Among other things, the server 106 processes information used in performing actions of the operator system 102 and monitoring tasks included in a CoA performed by the operator 112. In some embodiments, the server 106 includes one or more processors, one or more memories, and one or more communication interfaces. The server 106 may be implemented in any suitable manner to perform the described functions. While described as a server here, the device(s) actually implementing the server 106 may represent one or more desktop computers, laptop computers, server computers, or other computing or data processing devices or systems.

The database 108 stores various information used, generated, or collected by the server 106 and the operator system 102. For example, the database 108 may store inputs, outputs, and machine learning models associated with monitoring tasks included in a CoA performed by the operator 112.

The sensor 110 measures, detects, or otherwise senses a physical quantity or characteristic of the operator 112, the environment 114 and/or the operator system 102, and converts the measured or detected information into electrical signals. For example, the sensor 110 can include one or more cameras or other imaging sensors. The sensor 110 can also include a gesture sensor, a gyroscope, an air pressure sensor, an accelerometer, a proximity sensor, a bio-physical sensor, a temperature sensor, an electromyography (EMG) sensor, an electroencephalogram (EEG) sensor, an electrocardiogram (EKG) sensor, an iris sensor, a fingerprint sensor, or the like. In some embodiments, the sensor 110 is worn by the operator 112. In other embodiments, the sensor 110 is coupled to or is otherwise a part of the operator system 102 and/or the environment 114.

The operator 112 represents a human operator that performs one or more skilled operations in the environment 114. For example, in some scenarios, the operator 112 is an aircraft pilot. In other scenarios, the operator 112 is a land vehicle driver. In still other scenarios, the operator 112 is a computer operator capable of performing simulations on the operator system 102. In yet other scenarios, the operator 112 is mechanic or technician that performs maintenance or work on the operator system 102, or other object (e.g., vehicle) located in the environment 114.

The environment 114 provides the surroundings or conditions in which the operator 112 operates. For example, in some embodiments, the environment 114 is an operate-controlled aircraft piloted by the operator 112, who is a pilot. In other embodiments, the environment 114 is a land vehicle driven by the operator 112. In some cases, the environment 114 includes physical features surrounding a device, assembly, vehicle, such as roads, atmosphere, terrain, a room within a building, and the like. As described herein, or more characteristics or properties of the operator 112 or the environment 114 can be measured by the sensor 110 and provided to the server 106.

There are a number of possible ways to implement the CoA monitoring system 100 in order to monitor tasks included in a CoA performed by the operator 112. For example, in some embodiments, the server 106 and database 108 are owned, operated, or managed by a common entity. In other embodiments, the server 106 and database 108 are owned, operated, or managed by different entities. It should be appreciated, however, that this disclosure is not limited to any particular organizational implementation.

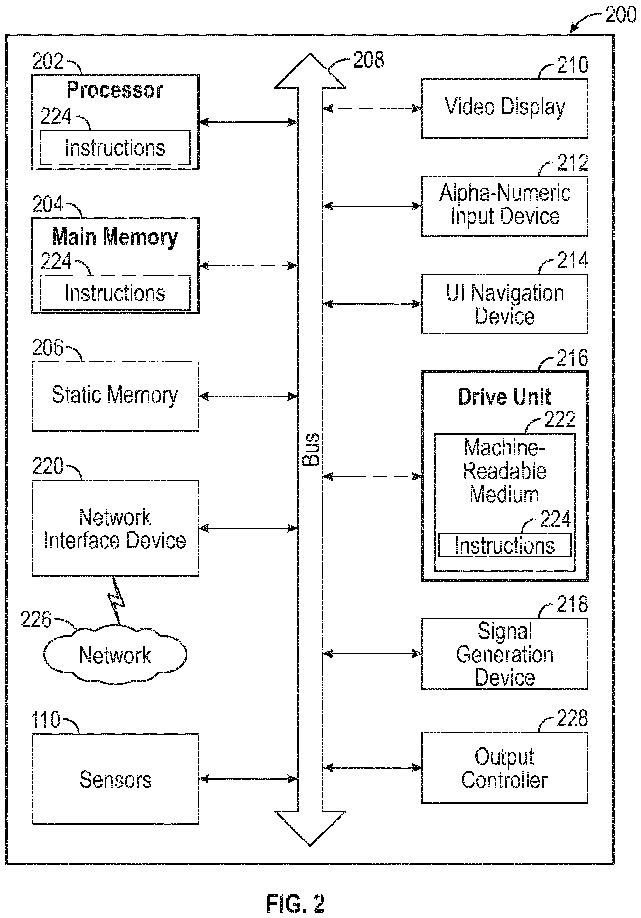

FIG. 2 illustrates a circuit block diagram of a computing machine 200 capable of operating a CoA monitoring system 100, which employs a task-based distributional semantic model for inferring intent similarity of user performing tasks of a CoA according to a non-limiting embodiment. In some embodiments, components of the computing machine 200 may store or be integrated into other components shown in the circuit block diagram of FIG. 2. For example, portions of the computing machine 200 may reside in the processor 202 and may be referred to as "processing circuitry." Processing circuitry may include processing hardware, for example, one or more central processing units (CPUs), one or more graphics processing units (GPUs), and the like. In alternative embodiments, the computing machine 200 may operate as a standalone device or may be connected (e.g., networked) to other computers. In a networked deployment, the computing machine 200 may operate in the capacity of a server, a client, or both in server-client network environments. In an example, the computing machine 200 may act as a peer machine in peer-to-peer (P2P) (or other distributed) network environment. In this document, the phrases P2P, device-to-device (D2D) and sidelink may be used interchangeably. The computing machine 200 may be a specialized computer, a personal computer (PC), a tablet PC, a personal digital assistant (PDA), a mobile telephone, a smart phone, a web appliance, a network router, switch or bridge, or any machine capable of executing instructions (sequential or otherwise) that specify actions to be taken by that machine.

Examples, as described herein, may include, or may operate on, logic or a number of components, modules, or mechanisms. Modules and components are tangible entities (e.g., hardware) capable of performing specified operations and may be configured or arranged in a certain manner. In an example, circuits may be arranged (e.g., internally or with respect to external entities such as other circuits) in a specified manner as a module. In an example, the whole or part of one or more computer systems/apparatus (e.g., a standalone, client or server computer system) or one or more hardware processors may be configured by firmware or software (e.g., instructions, an application portion, or an application) as a module that operates to perform specified operations. In an example, the software may reside on a machine readable medium. In an example, the software, when executed by the underlying hardware of the module, causes the hardware to perform the specified operations.

Accordingly, the term "module" (and "component") is understood to encompass a tangible entity, be that an entity that is physically constructed, specifically configured (e.g., hardwired), or temporarily (e.g., transitorily) configured (e.g., programmed) to operate in a specified manner or to perform part or all of any operation described herein. Considering examples in which modules are temporarily configured, each of the modules need not be instantiated at any one moment in time. For example, where the modules comprise a general-purpose hardware processor configured using software, the general-purpose hardware processor may be configured as respective different modules at different times. Software may accordingly configure a hardware processor, for example, to constitute a particular module at one instance of time and to constitute a different module at a different instance of time.

The computing machine 200 may include a hardware processor 202 (e.g., a central processing unit (CPU), a GPU, a hardware processor core, or any combination thereof), a main memory 204 and a static memory 206, some or all of which may communicate with each other via an interlink (e.g., bus) 208. Although not shown, the main memory 204 may contain any or all of removable storage and non-removable storage, volatile memory or non-volatile memory. The computing machine 200 may further include a video display unit 210 (or other display unit), an alphanumeric input device 212 (e.g., a keyboard), and a user interface (UI) navigation device 214 (e.g., a mouse). In an example, the display unit 210, input device 212 and UI navigation device 214 may be a touch screen display. The computing machine 200 may additionally include a storage device (e.g., drive unit) 216, a signal generation device 218 (e.g., a speaker), a network interface device 220, and one or more sensors 110, such as a global positioning system (GPS) sensor, compass, accelerometer, image sensor, camera, Radio Frequency Identification (RFID) sensor, quick read (QR) code, or other sensor. The computing machine 200 may include an output controller 228, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

The drive unit 216 (e.g., a storage device) may include a machine readable medium 222 on which is stored one or more sets of data structures or instructions 224 (e.g., software) embodying or utilized by any one or more of the techniques or functions described herein. The instructions 224 may also reside, completely or at least partially, within the main memory 204, within static memory 206, or within the hardware processor 202 during execution thereof by the computing machine 200. In an example, one or any combination of the hardware processor 202, the main memory 204, the static memory 206, or the storage device 216 may constitute machine readable media.

While the machine readable medium 222 is illustrated as a single medium, the term "machine readable medium" may include a single medium or multiple media (e.g., a centralized or distributed database, and/or associated caches and servers) configured to store the one or more instructions 224.

The term "machine readable medium" may include any medium that is capable of storing, encoding, or carrying instructions for execution by the computing machine 200 and that cause the computing machine 200 to perform any one or more of the techniques of the present disclosure, or that is capable of storing, encoding or carrying data structures used by or associated with such instructions. Non-limiting machine readable medium examples may include solid-state memories, and optical and magnetic media. Specific examples of machine readable media may include: non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; Random Access Memory (RAM); and CD-ROM and DVD-ROM disks. In some examples, machine readable media may include non-transitory machine readable media. In some examples, machine readable media may include machine readable media that is not a transitory propagating signal.

The instructions 224 may further be transmitted or received over a communications network 226 using a transmission medium via the network interface device 220 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), mobile telephone networks (e.g., cellular networks), Plain Old Telephone (POTS) networks, and wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, a Long Term Evolution (LTE) family of standards, a Universal Mobile Telecommunications System (UMTS) family of standards, peer-to-peer (P2P) networks, among others. In an example, the network interface device 220 may include one or more physical jacks (e.g., Ethernet, coaxial, or phone jacks) or one or more antennas to connect to the communications network 226.

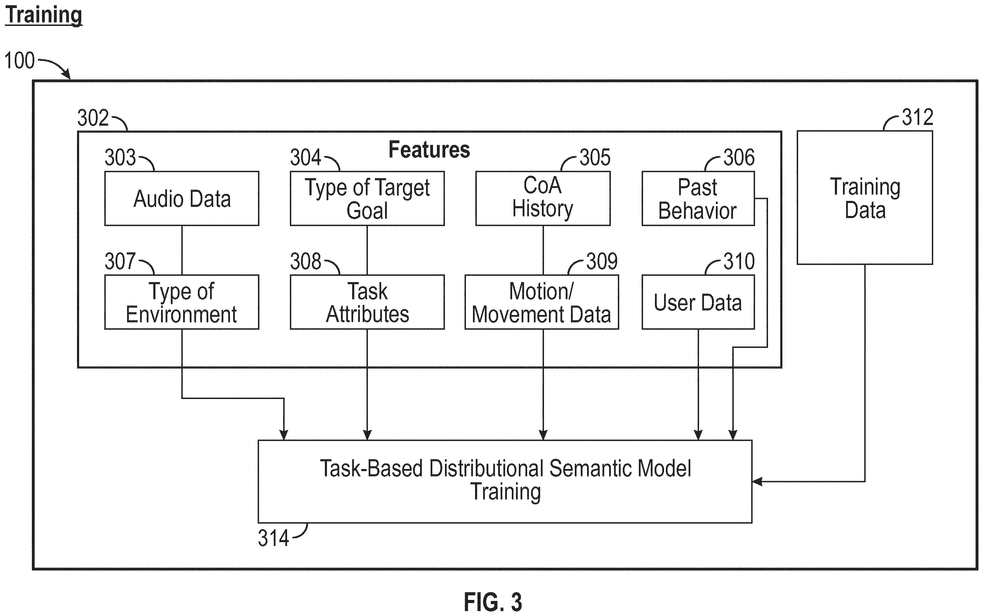

FIG. 3 illustrates a machine-learning system 300 employed by the CoA monitoring system 100 to train a task-based distributional semantic model or embeddings for inferring intent similarity according to some example embodiments. The machine-learning system 300 implements one or more machine-learning programs (MLPs), also referred to as machine-learning algorithms or tools, which are utilized to perform operations associated with machine learning tasks, such as image recognition or machine translation. In one or more embodiments described herein, the MLP or tool is a task-based distributional semantic model or embeddings for inferring intent similarity of a CoA performed by the operator 112.

As described herein, machine learning is a technology that gives computers the ability to learn without being explicitly programmed. Accordingly, the machine-learning system 300 can construct the task-based distributional semantic model or embeddings, which utilizes existing data to learn various CoAs that can be performed by an operator to achieve an ultimate goal. The machine-learning system 300 can generate the task-based distributional semantic model or embeddings from example training data 312 in order to make data-driven predictions or decisions expressed as outputs or assessments 320. The training data can include a known sequence of tasks that define a reference or "ideal" sequence of tasks that would perfectly or successfully achieves the target goal. The known sequence of tasks can be determined by monitoring and recording an operator 112 performing a specific sequence of tasks of a CoA known to perfectly or successfully achieve a target goal. The recording of the known sequence tasks can then be stored in the database 108 and used as a reference to be compared to new data (e.g., real time tasks performed by an operator 112 in real time) to determine the assessments 320. The assessments 320 are inferences on intent similarity of a CoA performed by the operator 112 in real time. The intent similarity refers to a deviation of a task perform in real time from a task included in the reference sequence and whether the deviation is significant enough to result in a failure to achieve the intended target goal. Although example embodiments are presented with respect to a few machine-learning tools, the principles presented herein may be applied to other machine-learning tools.

In some example embodiments, different machine-learning tools may be used. For example, Logistic Regression (LR), Naive-Bayes, Random Forest (RF), neural networks (NN), matrix factorization, and Support Vector Machines (SVM) tools may be used for classifying or tasks performed in a CoA to achieve an intended target goal.

Two common types of problems in machine learning are classification problems and regression problems. Classification problems, also referred to as categorization problems, aim at classifying items into one of several category values (for example, is this object an apple or an orange). Regression algorithms aim at quantifying some items (for example, by providing a value that is a real number).

The machine-learning algorithms utilize features 302 for analyzing the training data to learn the various CoAs that can be performed by an operator to achieve an ultimate goal. A feature 302 is an individual measurable property of a phenomenon being observed. The concept of a feature is related to that of an explanatory variable used in statistical techniques such as linear regression. Choosing informative, discriminating, and independent features is important for effective operation of the machine-learning system 300 in pattern recognition, classification, and regression. Features may be of different types, such as numeric features, strings, and graphs. In one example embodiment, the features 302 may be of different types and may include one or more of audio data 303, types of target goals 304, CoA history 305, past user behavior 306, type of environment 307, task attributes 308, motion/movement data 309, and user data 310.

The audio data 303 includes words spoken by the user, sounds occurring in the environment of the user, audio alarms generated in the environment, etc. The types of target goals 304 can include predetermined or common target goals associated with a CoA performed by a user. The CoA history 305 includes different CoAs performed by the user to achieve a given target goal. In some instances, two or more different CoAs may achieve the same target goal. The past behavior 306 includes past actions, motions, movements, etc. performed by a user to perform a given task in included in a CoA. The type of environment 307 includes different systems, objects, components, etc. on which a user performs a CoA to achieve a target goal. For instance, one target goal may be replacement of latch or sensor on an object such as a vehicle, for example, while another goal may include replacement or installation of an O-ring or pipe in a system such as, for example, heating, ventilation, and air conditioning (HVAC) system. The task attributes 308 include different types of tasks included in a CoA. When replacing a latch in a vehicle, for example, a first task attribute may include rotating a wrench in a first direction to loosen a screw, a second attribute may include rotating a wrench in a second direction to tighten a screw, a third attribute may include installing a screw in a particular grommet and/or hole necessary to fix the latch, etc. The motion/movement data 303 may include movement of a user's hands and/or arms, walking path of a user, or other movements and/or motions performed by the user. The user data 310 includes the type of user performing the CoA (e.g., a maintenance technician, type of tradesperson (e.g. mechanic, painter, plumber, electrician, etc.), the specific person performing the CoA, etc.

The machine-learning algorithms utilize the training data 312 to find correlations among the identified features 302 that affect the outcome or assessment 320. In some example embodiments, the training data 312 includes labeled data, which is known data for one or more identified features 302 and one or more outcomes, such as detecting communication patterns, detecting the meaning of the message, generating a summary of the message, detecting action items in the message, detecting urgency in the message, detecting a relationship of the user to the sender, calculating score attributes, calculating message scores, etc.

With the training data 312 and the identified features 302, the task-based distributional semantic model 314 is trained. During the training operation, the machine-learning system 300 learns the value of the features 302 as they correlate to the training data 312. During a learning phase, the task-based distributional semantic model is developed against a training dataset of inputs to optimize the models to correctly predict the output for a given input. Generally, the learning phase may be supervised, semi-supervised, or unsupervised; indicating a decreasing level to which the "correct" outputs are provided in correspondence to the training inputs. In a supervised learning phase, all of the outputs are provided to the task-based distributional semantic model and the task-based distributional semantic model is directed to develop a general rule or algorithm that maps the input to the output. In contrast, in an unsupervised learning phase, the desired output is not provided for the inputs so that the task-based distributional semantic model may develop its own rules to discover relationships within the training dataset. In a semi-supervised learning phase, an incompletely labeled training set is provided to the task-based distributional semantic model, with some of the outputs known and some unknown for the training dataset.

The task-based distributional semantic model can be run against a training dataset for several epochs (e.g., iterations), in which the training dataset is repeatedly fed into the task-based distributional semantic model to refine its results. For example, in a supervised learning phase, a task-based distributional semantic model is developed to predict the output for a given set of inputs, and is evaluated over several epochs to more reliably provide the output that is specified as corresponding to the given input for the greatest number of inputs for the training dataset. In another example, for an unsupervised learning phase, the task-based distributional semantic model is developed to cluster the dataset into a number "n" of groups, and is evaluated over several epochs as to how consistently it places a given input into a given group and how reliably it produces the number "n" of desired clusters across each epoch.

Once an epoch is run, the task-based distributional semantic model is evaluated and the values of their variables are adjusted to attempt to better refine the task-based distributional semantic model in an iterative fashion. In various aspects, the evaluations are biased against false negatives, biased against false positives, or evenly biased with respect to the overall accuracy of the task-based distributional semantic model. The values may be adjusted in several ways depending on the machine learning technique used. One of ordinary skill in the art will be familiar with several other machine learning algorithms that may be applied with the present disclosure, including linear regression, random forests, decision tree learning, neural networks, deep neural networks, etc.

According to a non-limiting embodiment, the task-based distributional semantic model can develop a rule or algorithm over several epochs by varying the values of one or more variables affecting the inputs to more closely map to a desired result, but as the training dataset may be varied, and is preferably very large, perfect accuracy and precision may not be achievable. A number of epochs that make up a learning phase, therefore, may be set as a given number of trials or a fixed time/computing budget, or may be terminated before that number/budget is reached when the accuracy of a given model is high enough or low enough or an accuracy plateau has been reached. For example, if the training phase is designed to run "n" epochs and produce the task-based distributional semantic model with at least 95% accuracy, and the task-based distributional semantic model is produced before the nth epoch, the learning phase may end early and use the produced task-based distributional semantic model satisfying the end-goal accuracy threshold. Similarly, if the task-based distributional semantic model is inaccurate enough to satisfy a random chance threshold (e.g., the task-based distributional semantic model is only 55% accurate in determining true/false outputs for given inputs), the learning phase for the task-based distributional semantic model may be terminated early. Similarly, when the task-based distributional semantic model continues to provide similar accuracy or vacillate in its results across multiple epochs-having reached a performance plateau-the learning phase for the task-based distributional semantic model can terminate before the epoch number/computing budget is reached.

Once the learning phase is complete, the task-based distributional semantic model is finalized. In some example embodiments, the finalized task-based distributional semantic model is evaluated against testing criteria. In a first example, a testing dataset that includes known outputs for its inputs is fed into the finalized models to determine an accuracy of the model in handling data that is has not been trained on. In a second example, a false positive rate or false negative rate may be used to evaluate the task-based distributional semantic model after finalization.

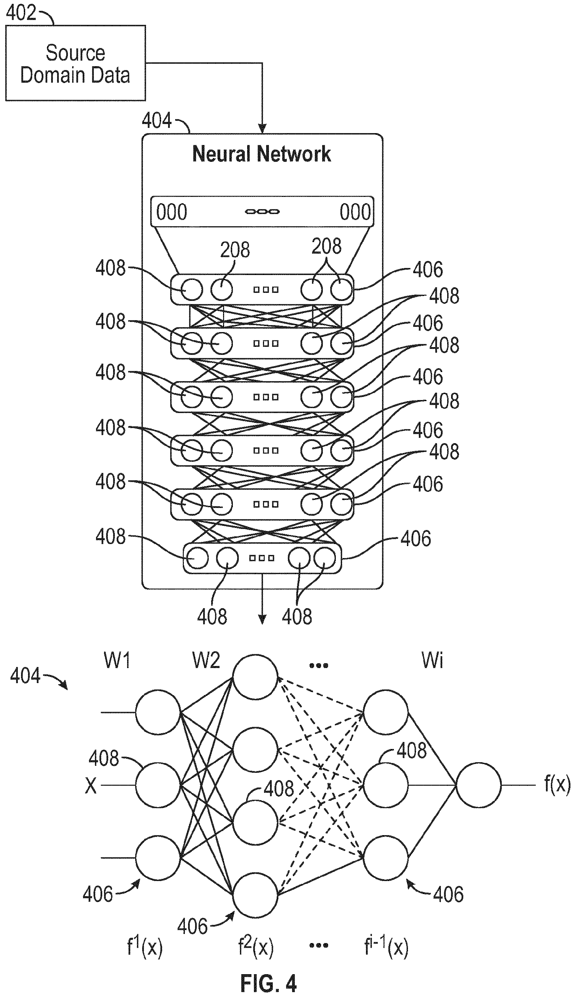

FIG. 4 illustrates an example neural network 404, in accordance with some embodiments. As shown, the neural network 404 receives, as input (x), source domain data 402. The input (x) is passed through a plurality of layers 406 to arrive at an output. Each layer 406 includes multiple neurons 408. The neurons 408 receive input from neurons of a previous layer 406 and apply weights to the values received from those neurons 408 in order to generate a neuron output. The neuron 408 outputs from the final layer 406 are combined to generate the output of the neural network 404.

As illustrated at the bottom of FIG. 4 , the input is a vector x. The input is passed through multiple layers 406 via nodes 408, where weights W1, W2, ... , Wi are applied to the input at each layer 406 to arrive at f1(x), f2(x), ... , f-1(x), until finally the output f(x) is computed.

In some example embodiments, the neural network 404 (e.g., deep learning, deep convolutional, or recurrent neural network) comprises a series of neurons 408, such as Long Short Term Memory (LSTM) nodes, arranged into a network. A neuron 408 is an architectural element used in data processing and artificial intelligence, particularly machine learning, which includes memory that may determine when to "remember" and when to "forget" values held in that memory based on the weights of inputs provided to the given neuron 408. Each of the neurons 408 used herein are configured to accept a predefined number of inputs from other neurons 408 in the neural network 404 to provide relational and sub-relational outputs for the content of the frames being analyzed. Individual neurons 408 may be chained together and/or organized into tree structures in various configurations of neural networks to provide interactions and relationship learning modeling for how each of the frames in an utterance are related to one another.

For example, an LSTM node serving as a neuron includes several gates to handle input vectors (e.g., phonemes from an utterance), a memory cell, and an output vector (e.g., contextual representation). The input gate and output gate control the information flowing into and out of the memory cell, respectively, whereas forget gates optionally remove information from the memory cell based on the inputs from linked cells earlier in the neural network. Weights and bias vectors for the various gates are adjusted over the course of a training phase, and once the training phase is complete, those weights and biases are finalized for normal operation. One of skill in the art will appreciate that neurons and neural networks may be constructed programmatically (e.g., via software instructions) or via specialized hardware linking each neuron to form the neural network.

Neural networks utilize features for analyzing the data to generate assessments (e.g., recognize units of user movement/motions, a user's environment, units of attempted tasks, a sequence of performed tasks, etc.). A feature is an individual measurable property of a phenomenon being observed. The concept of feature is related to that of an explanatory variable used in statistical techniques such as linear regression. Further, deep features represent the output of nodes in hidden layers of the deep neural network.

A neural network, sometimes referred to as an artificial neural network, is a computing system/apparatus based on consideration of biological neural networks of animal brains. Such systems/apparatus progressively improve performance, which is referred to as learning, to perform tasks, typically without task-specific programming. For example, in image recognition, a neural network may be taught to identify images, movement, motion, etc.in relation to an object by analyzing example images and/or video streams that have been tagged with a name for the movement, motion, environment, and object, etc., and, having learnt the movement, motion, object and name, may use the analytic results to identify the movement, motion, environment, object, etc. in untagged images. As describe above, the neural network is based on a collection of connected units called neurons 408, where each connection, called a synapse, between neurons can transmit a unidirectional signal with an activating strength that varies with the strength of the connection. The receiving neuron 408 can activate and propagate a signal to downstream neurons 408 connected to it, typically based on whether the combined incoming signals, which are from potentially many transmitting neurons 408, are of sufficient strength, where strength is a parameter.

A deep neural network (DNN), for example, is a stacked neural network, which is composed of multiple layers. As described herein, the layers 406 are composed of nodes 408, which are locations where computation occurs, loosely patterned on a neuron in the human brain, which fires when it encounters sufficient stimuli. A node 408 combines input from the data with a set of coefficients, or weights, that either amplify or dampen that input, which assigns significance to inputs for the task the algorithm is trying to learn. These input-weight products are summed, and the sum is passed through what is called a node's activation function, to determine whether and to what extent that signal progresses further through the network to affect the ultimate outcome. A DNN uses a cascade of many layers of non-linear processing units for feature extraction and transformation. Each successive layer 406 uses the output from the previous layer 406 as input. Higher-level features are derived from lower-level features to form a hierarchical representation. The layers 406 following the input layer 406 may be convolution layers that produce feature maps that are filtering results of the inputs and are used by the next convolution layer.

In training of a DNN architecture, a regression, which is structured as a set of statistical processes for estimating the relationships among variables, can include a minimization of a cost function. The cost function may be implemented as a function to return a number representing how well the neural network performed in mapping training examples to correct output. In training, if the cost function value is not within a pre-determined range, based on the known training images, backpropagation is used, where backpropagation is a common method of training artificial neural networks that are used with an optimization method such as a stochastic gradient descent (SGD) method.

Use of backpropagation can include propagation and weight update. When an input is presented to the neural network, it is propagated forward through the neural network, layer by layer, until it reaches the output layer. The output of the neural network is then compared to the desired output, using the cost function, and an error value is calculated for each of the nodes in the output layer. The error values are propagated backwards, starting from the output, until each node has an associated error value which roughly represents its contribution to the original output. Backpropagation can use these error values to calculate the gradient of the cost function with respect to the weights in the neural network. The calculated gradient is fed to the selected optimization method to update the weights to attempt to minimize the cost function.

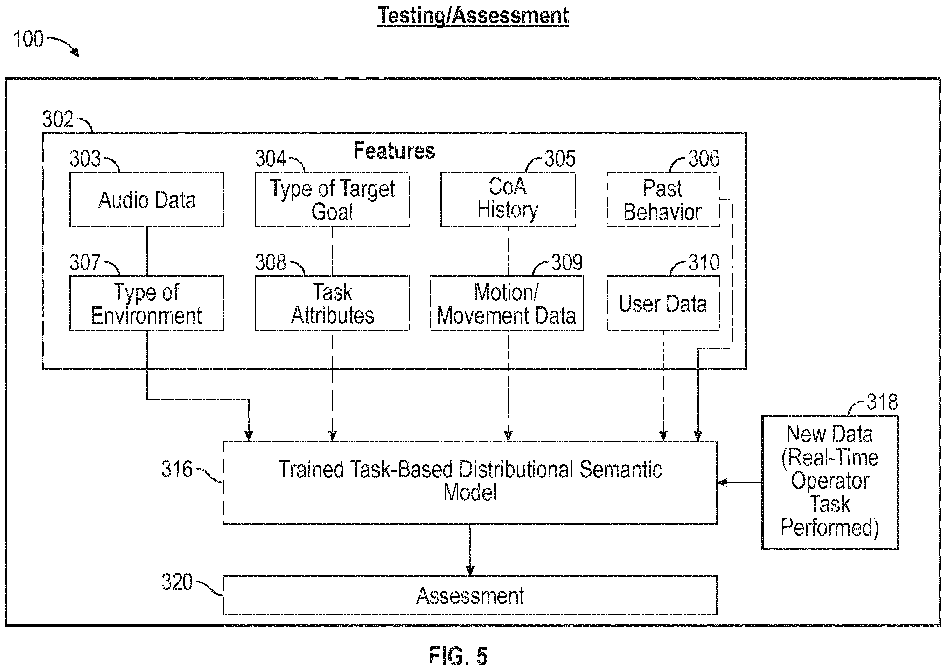

Turning to FIG. 5, the CoA monitoring system 100 is illustrated following training of the machine-learning system 300 to produce a trained task-based distributional semantic model 316 for inferring intent similarity when the operator 112 acting in the environment 114 performs tasks included in a CoA during real-time.

When the task-based distributional semantic model 316 is used to perform testing and assessments 320 (e.g., perform inferences on intent similarity of a CoA performed by the operator 112), new data 318 is provided as an input to the trained task-based distributional semantic model 316, and the task-based distributional semantic model 316 generates the assessment 320 as an output. The new data 318 includes, for example, tasks included in a CoA performed by the operator 112 in real-time. The operator 112 and/or the tasks performed by operator 112 can be monitored using, for example, the sensor(s) 110, and input to the trained task-based distributional semantic model 316 as new data 318.

In one or more non-limiting embodiments, the CoA monitoring system 100 can compare a sequence of tasks to a reference distribution generated during the training of the model 316 and determine a deviation from intent using a cosine similarity analysis as a proxy for intent similarity. In this manner the CoA monitoring system 100 use the cosine similarity analysis to determine whether a deviation of a given task will result in failure to achieve the target goal. According to a non-limiting embodiment, the cosine similarity analysis can produce a value indicating a level of the deviation from a task or a sequence of tasks expected to be performed in order to achieve the target goal. When the cosine similarity value indicating the level of the deviation exceeds a threshold value, the CoA monitoring system can determine the target goal will not be completed as expected and can generate an alert indicating the deviation.

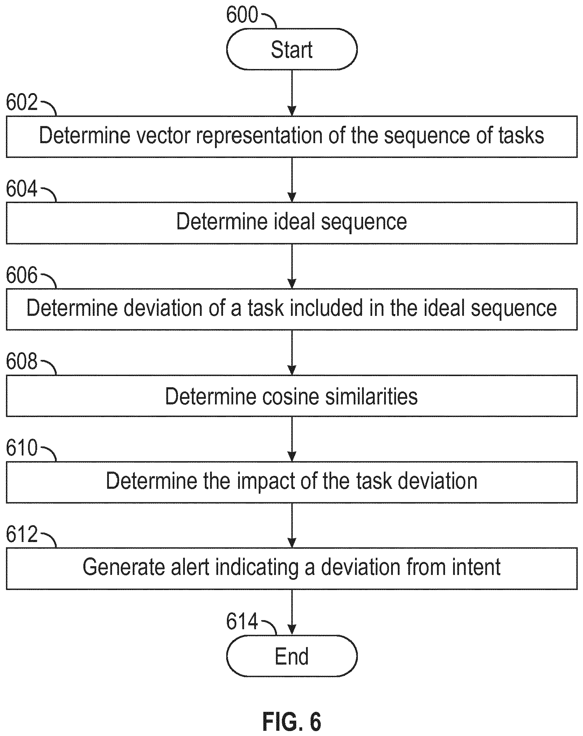

FIG. 6 is a flow diagram illustrating a method of performing a cosine similarity analysis to determine a deviation from intent using a cosine similarity analysis as a proxy for intent similarity. The method begins at operation 600 and determines a vector representation of the sequence of tasks included in a CoA that achieves the target goal at operation 602. According to a non-limiting embodiment, determining the vector representation of the sequence of tasks includes representing each task in the sequence, as well as the end goal, as vectors. The vectors can be set based on attributes, features, or descriptors that define each task and the overall goal. For example, if tasks involve resource utilization, time taken, quality measures, etc., these can be dimensions in the vector space.

At operation 604, an ideal sequence is established. In at least one non-limiting embodiment, the ideal sequence can be established by defining a reference or "ideal" sequence of tasks that would perfectly achieve the end goal. The ideal sequence can then be represented as a cumulative vector, combining the attributes from all tasks in the sequence.

At operation 606, a deviation of a task included in the ideal sequence is determined. According to a non-limiting embodiment, determining the deviation includes introducing a deviation in one of the tasks in the sequence. The introduction of a deviation can include altering the vector representation of that task to represent potential real-world variations or errors. The cumulative vector can for the sequence can then be recomputed with the altered task.

At operation 608 cosine similarities are determined. According to a non-limiting embodiment a cosine similarity is computed between the cumulative vector of the altered sequence and the vector representation of the end goal is computed. Similarly, a cosine similarity for the original, ideal sequence and the end goal is also computed.

At operation 610, the impact of the task deviation is assessed. The assessment includes determining a level of deviation by comparing the cosine similarity values from operation 608. When the cosine similarity of the altered sequence is significantly lower (e.g., lower by a threshold value) than that of the ideal sequence, this suggests that the deviation in the task has a negative impact on achieving the end goal. In at least one embodiment, the cosine similarity value is compared to a threshold value. When the cosine similarity value is less than the threshold value, the CoA monitoring system 100 determines the deviation has a negative impact on achieving the intended target goal (e.g., will result in failure to achieve the target goal of the CoA). Accordingly, the degree of reduction in similarity can give an indication of the severity of the impact.

At operation 612, the CoA monitoring system 100 generates an alert indicating a deviation from intent in response to determining the deviation in the task has a negative impact on achieving the intended target goal, and the method ends at operation 614. The alert can include, a visual alert, audio alert, haptic alert, and/or any combination thereof. Accordingly, the CoA monitoring system 100 can systematically introduce deviations in different tasks, or combinations of tasks, to assess which deviations are most detrimental or significant enough that it will negatively impact the ability to achieve the target goal. In one or more non-limiting embodiments, the alert can also include a instructions on how to correct the deviation (e.g., how to correctly perform one or more the tasks) in order to successfully achieve the end goal.

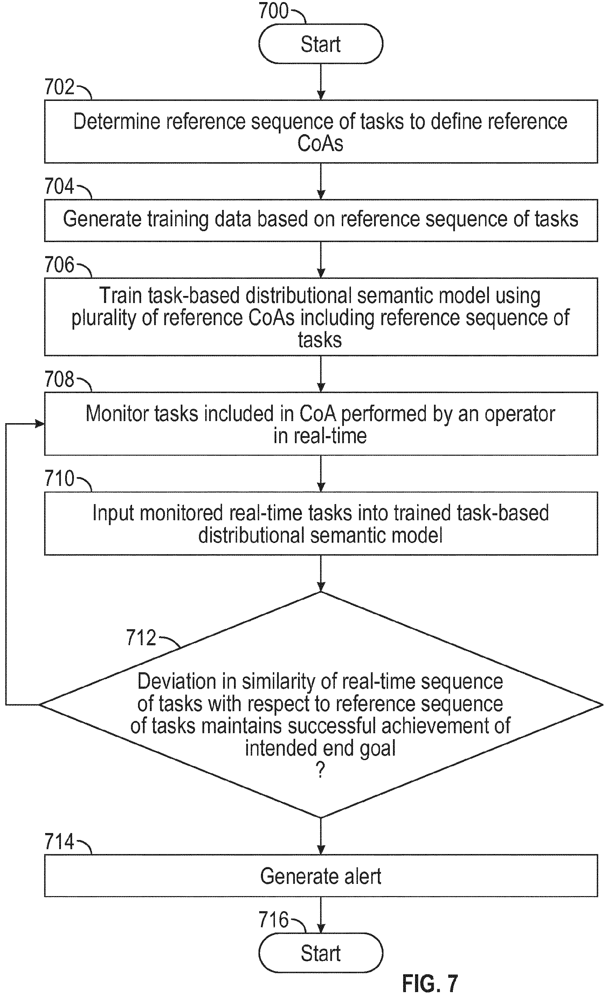

Turning now to FIG. 7, a method inferring intent similarity of user performing tasks of a CoA using a task-based distributional semantic model is illustrated according to a non-limiting embodiment of the disclosure. The method begins at operation 700 and reference sequences (e.g., ideal sequences) of tasks to define reference CoAs are determined at operation 702. At operation 704, training data is generated based on reference sequence of tasks. At operation 706, a task-based distributional semantic model is trained using the plurality of reference CoAs including the reference sequence of tasks. At operation 708, tasks included in a CoA performed by an operator in real-time are monitored, e.g., by sensors included in the environment of the operator. At operation 710, the monitored real-time tasks are input into trained task-based distributional semantic model.

At operation 712, a determination is made as to whether a deviation in similarity of real-time sequence of tasks with respect to reference sequence of tasks will maintain a successful achievement of intended end goal. In one or more non-limiting embodiments, a cosine similarity analysis is performed to determine the deviation and the significance of the deviation. When the deviation will still maintain a successful achievement of intended end goal (e.g., the deviation is not significant or substantial), the method returns to operation 708 and continues monitoring the real-time tasks performed the operator. When, however, the deviation will prevent the achievement of intended end goal (e.g., the deviation is significant or substantial), an alert indicating the deviation from similar intent of the tasks is generated at operation 714 and the method ends at operation 716.

Many of the functional units of the systems described in this specification have been labeled as modules. Embodiments of the disclosure apply to a wide variety of module implementations. For example, a module can be implemented as a hardware circuit including custom VLSI circuits or gate arrays, off-the-shelf semiconductors such as logic chips, transistors, or other discrete components. A module can also be implemented in programmable hardware devices such as field programmable gate arrays, programmable array logic, programmable logic devices or the like. Modules can also be implemented in software for execution by various types of processors. An identified module of executable code can, for instance, include one or more physical or logical blocks of computer instructions which can, for instance, be organized as an object, procedure, or function. Nevertheless, the executables of an identified module need not be physically located together, but can include disparate instructions stored in different locations which, when joined logically together, function as the module and achieve the stated purpose for the module.

The various components/modules/models of the systems illustrated herein are depicted separately for ease of illustration and explanation. In embodiments of the disclosure, the functions performed by the various components/modules/models can be distributed differently than shown without departing from the scope of the various embodiments of the disclosure describe herein unless it is specifically stated otherwise.

Aspects of the disclosure can be embodied as a system, a method, and/or a computer program product at any possible technical detail level of integration. The computer program product may include a computer readable storage medium (or media) having computer readable program instructions thereon for causing a processor to carry out aspects of the present disclosure.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

The terms "about," "substantially," and equivalents thereof are intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A course of action, CoA, monitoring system (100) comprising:
a sensor (110)configured to monitor tasks included in a course of action, CoA, performed by a human operator in an environment;
a computing system in signal communication with the sensor, the computing system including a database storing a plurality of reference CoAs defined by reference tasks having an intended target goal, and storing a trained task-based distributional semantic model configured to determine an intent similarity of the operator performing tasks included in the CoA during real-time,
wherein the computing system inputs the monitored tasks determined by the sensor into the trained task-based distributional semantic model to determine a deviation between the reference tasks and the monitored tasks.

2. The CoA monitoring system of claim 1, wherein the computing system performs a cosine similarity analysis to produce a similarity value indicating a level of the deviation.

3. The CoA monitoring system of claim 2, wherein the computing system compares the similarity value to a threshold value and a failure to achieve the intended target goal based on the comparison.

4. The CoA monitoring system of claim 3, wherein the computing system determines the failure to achieve the intended target goal in response to the similarity value being less than the threshold value.

5. The CoA monitoring system of claim 3 or 4, wherein the cosine similarity analysis includes assigning a reference vector to each reference task included in the reference CoA, assigning a vector to each monitored task performed by the operator, and determining a distance between the vector of a monitored task and the reference vector of the reference task.

6. The CoA monitoring system of claim 3, 4 or 5, wherein the computing system generates an alert in response to determining the failure to achieve the intended target goal.

7. The CoA monitoring system of claim 6, wherein the alert includes instructions on how to correct the deviation.

8. A method of monitoring a course of action, CoA, the method comprising:
storing, in a database, a plurality of reference CoAs defined by reference tasks having an intended target goal;
storing, in a computing system, a trained task-based distributional semantic model configured to determine an intent similarity of the operator performing tasks included in the CoA during real-time,
monitoring, via a sensor, tasks included in a course of action, CoA, performed by a human operator in an environment;
outputting the monitored tasks from the sensor to the computing system;
inputting the monitored tasks into the trained task-based distributional semantic model to determine a deviation between the reference tasks and the monitored tasks.

9. The method of claim 8, further comprising performing a cosine similarity analysis to produce a similarity value indicating a level of the deviation.

10. The method of claim 9, further comprising:
comparing the similarity value to a threshold value; and
determining a failure to achieve the intended target goal based on the comparison.

11. The method of claim 10, further comprising determining the failure to achieve the intended target goal in response to the similarity value being less than the threshold value.

12. The method of claim 10 or 11, wherein the cosine similarity analysis includes assigning a reference vector to each reference task included in the reference CoA, assigning a vector to each monitored task performed by the operator, and determining a distance between the vector of a monitored task and the reference vector of the reference task.

13. The method of claim 10, 11 or 12, further comprising generating an alert in response to determining the failure to achieve the intended target goal.

14. The method of claim 13, wherein the alert includes instructions on how to correct the deviation.
